# EUROPEAN PATENT APPLICATION

(11) **EP 4 819 751 A1**
(43) Date of publication of application: **07.10.2026**
(21) Application number: 24926377.3
(22) Date of filing: 28.02.2024
(51) Int. Cl.: H04W 74/0833

(54) **COMMUNICATION METHODS AND APPARATUSES, AND DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN); SHI, Cong, Dongguan, Guangdong 523860 (CN); LIU, Yang, Dongguan, Guangdong 523860 (CN)
(74) Representative: Grassi, Stefano
(86) International application number: PCT/CN2024/079073
(87) International publication number: WO 2025/179494

(57) **Abstract**

Provided in the present application are communication methods and apparatuses, and a device, a chip and a storage medium. A method comprises: receiving first information sent by a second device, the first information being used by a plurality of devices to update the values of counters of the plurality of devices; and when the updated value of a counter of a first device is equal to a first threshold value, sending second information to the second device on a first time-domain transmission occasion among M time-domain transmission occasions located after the first information, the second information being used for initiating a random access quest, wherein the plurality of device comprise the first device, and M is an integer greater than 1.

## Description

### TECHNICAL FIELD

The present application relates to the field of communications, and in particular to a communication method and apparatus, a device, a chip, and a storage medium.

### BACKGROUND

In an Ambient Internet of Things (A-IoT) system, the inventory process for a Tag may include a random access procedure for the Tag and read/write operations on the Tag performed by a Reader after the Tag successfully accesses the Reader.

Tag inventory is performed in a time-division manner, where each downlink information transmission by the Reader can at most initiate inventory of one tag, and after the inventory of that one tag is completed, another downlink information transmission is required to start the inventory of a next tag. Therefore, the random access efficiency of Tag is reduced, and overhead of downlink information is increased.

### SUMMARY

The present application provides a communication method and apparatus, a device, a chip and a storage medium.

In a first aspect, the present application provides a communication method, including the following operations.

First information sent by a second device is received, where the first information is used for a plurality of devices to update values of their respective counters.

When an updated value of a counter of a first device is equal to a first threshold, second information is sent to the second device on a first time domain transmission occasion among M time domain transmission occasions located after the first information, the second information being used to initiate a random access request. Herein, the plurality of devices includes the first device, and M is an integer greater than 1.

In a second aspect, the present application provides a communication method, including the following operations.

First information is sent to a plurality of devices, where the first information is used for the plurality of devices to update values of their respective counters.

Second information respectively sent by two or more devices among the plurality of devices is received on two or more time domain transmission occasions among M time domain transmission occasions located after the first information, the second information being used to initiate a random access request. Herein, updated values of respective counters of the two or more devices are equal to a first threshold, and M is an integer greater than 1.

In a third aspect, the present application provides a communication apparatus, including a first receiving unit and a first sending unit.

The first receiving unit is configured to receive first information sent by a second device, the first information being used for a plurality of devices to update values of their respective counters.

The first sending unit is configured to: when an updated value of a counter of the apparatus is equal to a first threshold, send second information to the second device on a first time domain transmission occasion among M time domain transmission occasions located after the first information, the second information being used to initiate a random access request. Herein, the plurality of devices includes the apparatus, and M is an integer greater than 1.

In a fourth aspect, the present application provides a communication apparatus, including a second sending unit and a second receiving unit.

The second sending unit is configured to send first information to a plurality of devices, the first information being used for the plurality of devices to update values of their respective counters.

The second receiving unit is configured to receive, on two or more time domain transmission occasions among M time domain transmission occasions located after the first information, second information respectively sent by two or more devices among the plurality of devices, the second information being used to initiate a random access request. Herein, updated values of respective counters of the two or more devices are equal to a first threshold, and M is an integer greater than 1.

In a fifth aspect, the present application provides a communication device, including a memory, a processor, and a transceiver. The memory is configured to store a computer program. The processor is connected with the memory and is configured to invoke and execute the computer program from the memory to implement the method of the first aspect or the second aspect. The transceiver is configured to receive and transmit information during information exchange with other external devices.

In a sixth aspect, the present application provides a chip, including a memory, a processor, and a transceiver. The memory is configured to store a computer program. The processor is connected with the memory and is configured to invoke and execute the computer program from the memory, such that a device on which the chip is installed performs the method of the first aspect or the second aspect. The transceiver is configured to receive and transmit information during information exchange with a device or a chip.

In a seventh aspect, the present application provides a computer readable storage medium for storing a computer program that, when executed by at least one processor, causes to implement the method as described in the first aspect or the second aspect.

In an eighth aspect, the present application provides a computer program product including computer program or instructions that, when executed by a processor, cause to implement the method as described in the first aspect or the second aspect.

In a ninth aspect, the present application provides a computer program, which causes a computer to perform the method as described in the first aspect or the second aspect.

According to the communication method provided by the present application, a first device may receive first information sent by a second device, and the first information is used for multiple devices to update values of their respective counters; and when the updated value of a counter of the first device is equal to the first threshold, the first device sends second information to the second device on a first time domain transmission occasion among M time domain transmission occasions located after the first information, the second information being used to initiate a random access request; where the multiple devices includes the first device, and M is an integer greater than 1. In this way, based on the first information sent by the second device, the first device can send the second information on the first time domain transmission occasion among the M time domain transmission occasions, so that other devices can also send second information to the second device on time domain transmission occasions, other than the first time domain transmission occasion, among the M time domain transmission occasions. Therefore, the random access efficiency of the multiple devices is improved, and the overhead of the second device sending downlink information is reduced.

### BRIEF DESCRIPTION OF THE DRAWINGS

The accompanying drawings illustrated herein are used to provide further understanding of the present application and constitute a part of the present application, and illustrative embodiments of the present application and their descriptions are used to explain the present application and do not constitute improper limitation to the present application. In the drawings:
FIG. 1 is a schematic diagram of a communication architecture.
FIG. 2 is a schematic diagram of scenario of a zero-power communication network.
FIG. 3 is a schematic diagram of circuit structure of a radio frequency energy harvesting module.
FIG. 4 is a schematic diagram of circuit structure of backscattering communication.
FIG. 5 is a schematic diagram of circuit structure of resistance-based load modulation.
FIG. 6 is a schematic diagram of first scenario where a terminal device and a network device communicate.
FIG. 7 is a schematic diagram of second scenario where a terminal device and a network device communicate.
FIG. 8 is a schematic flowchart of tag inventory in an RFID system.
FIG. 9 is a schematic flowchart of a communication method provided by an embodiment of the present application.
FIG. 10 is a first detailed schematic flowchart of a communication method provided by an embodiment of the present application.
FIG. 11 is a schematic diagram of a format of second information provided by an embodiment of the present application.
FIG. 12 is a second detailed schematic flowchart of a communication method provided by an embodiment of the present application.
FIG. 13 is a third detailed schematic flowchart of a communication method provided by embodiments of the present application.
FIG. 14 is a schematic diagram of structural composition of a communication apparatus 1400 provided by an embodiment of the present application.
FIG. 15 is a schematic diagram of structural composition of a communication apparatus 1500 provided by an embodiment of the present application.
FIG. 16 is a schematic diagram of structural composition of a communication device provided by an embodiment of the present application.
FIG. 17 is a schematic structural diagram of a chip provided by an embodiment of the present application.
FIG. 18 is a schematic structural diagram of a communication system provided by an embodiment of the present application.

### DETAILED DESCRIPTION

The technical solutions in the embodiments of the present application will be described below in conjunction with the accompanying drawings in the embodiments of the present application. Obviously, the embodiments described are only a part of the embodiments of the present application, and not all of them. Based on the embodiments in the present application, all other embodiments obtained by those skilled in the art without creative work shall fall within the protection scope of the present application

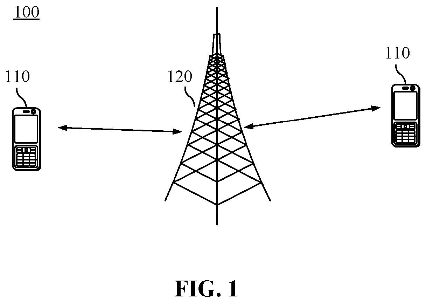

FIG. 1 is a schematic diagram of an application scenario in an embodiment of the present application.

As illustrated in FIG. 1, a communication system 100 includes terminal devices 110 and a network device 120. The network device 120 may be a device in communication with the terminal devices 110. Multiple service transmissions are supported between the terminal devices 110 and the network device 120.

It should be understood that the communication system 100 is merely used as an example for illustrative purposes in the embodiments of the present application, but the embodiments of the present application are not limited thereto. That is, the technical solutions of the embodiments of the present application may be applied to various communication systems, for example: a Long Term Evolution (LTE) system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or future communication systems, etc.

In the communication system 100 illustrated in FIG. 1, the network device 120 may be an access device in communication with the terminal devices 110. The access device may provide communication coverage for a particular geographic area and may communicate with terminal devices 110 within the coverage.

The network device 120 may be an evolutional Node B (eNB or eNodeB) in an LTE system, or a Next Generation Radio Access Network (NG RAN) device, or a base station (gNB) in an NR system, or a radio controller in a Cloud Radio Access Network (CRAN). Or, the network device 120 may be a relay station, an access point, a vehicle-mounted device, a wearable device, a hub, a switch, a bridge, a router, or a network device in a future evolved Public Land Mobile Network (PLMN), etc.

The terminal device 110 may be any terminal device, including but not limited to a terminal device that is connected to the network device 120 or other terminal devices via wired or wireless connections.

For example, the terminal device 110 may refer to an access terminal, user equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a session initiation protocol (SIP) telephone, an IoT device, a satellite handheld terminal, a wireless local loop (WLL) station, a personal digital assistant (PDA), a handheld device with wireless communication function, a computing device or other processing device connected to a wireless modem, an in-vehicle device, a wearable device, a terminal device in the 5G network or a terminal device in the future evolved network, etc.

In addition, in the embodiments of the present application, the terminal device may also be a terminal device in an IoT system. IoT is an important part for the development of future information technology, and its main technical characteristic is to connect items with a network through communication technology, thereby realizing an intelligent network of human-machine interconnection and Internet of things.

The terminal devices 110 may be used for Device to Device (D2D) communication.

FIG. 1 exemplarily illustrates one network device and two terminal devices. Optionally, the communication system 100 may include multiple network devices, and another number of terminal devices may be included within the coverage of each network device, which is not limited in the embodiments of the present application.

It is to be noted that FIG. 1 only illustrates a system to which the present application is applicable by way of examples, and the methods described in the embodiments of the present application may also be applied to other systems. Additionally, the terms "system" and "network" herein may often be used interchangeably herein.

In the following description, the involved "some embodiments" describes a subset of all possible embodiments, but it may be understood that "some embodiments" may be the same subset or different subsets of all possible embodiments and may be combined with each other without conflict.

It should be understood that the terms "first\second\third" involved in the embodiments of the present application are only used to distinguish similar objects, and does not represent a specific order of objects. It should be understood that "first\second\third" may be interchanged in a specific order or sequence where permitted, so that the embodiments of the present application described herein can be implemented in an order other than that illustrated or described herein.

It should also be understood that the term "and/or" herein is merely an association relationship for describing related objects, representing that there may be three kinds of relationships. For example, A and/or B may represent the following three situations: i.e., independent existence of A, existence of both A and B, and independent existence of B. In addition, the character "/" in the present application generally represents that an "or" relationship is formed between the previous and next associated objects.

It should also be understood that the "indication" mentioned in the embodiments of the present application may be a direct indication, an indirect indication, or may represent an associated relationship. For example, A indicating B may mean that A directly indicates B, for example, B may be acquired by A. It may also mean that A indicates B indirectly, for example, A indicates C, and B may be acquired by C. It may also mean that there is an association relationship between A and B.

It is to be understood that in the embodiments of the present application, the term "correspondence" mentioned herein may indicate that there is a direct correspondence or indirect correspondence between the two, or indicate that there is a correlation relationship between the two, or indicate a relationship between indicating and being indicated, configuring and being configured, or the like.

It is also to be understood that the "predefined" or "predefined rules" mentioned in the embodiments of the present application may be implemented by pre-storing corresponding codes, tables, or other manners that may be used to indicate relevant information in a device (e.g., the first device or the second device), the specific implementation of which is not limited by the present application. For example, predefined may refer to what is defined in the protocol. It is to be understood that in the embodiments of the present application, the "protocol" may refer to a standard protocol in communication field, including, for example, an LTE protocol, an NR protocol, and related protocols applied in future communication systems, which are not limited in the present application.

To facilitate understanding of the technical solutions in the embodiments of the present application, related technologies involved in the embodiments of the present application are described below. As optional solutions, the following related technologies may be combined with the technical solutions of the embodiments of the present application arbitrarily, all of which fall within the protection scope of the embodiments of the present application.

Zero-power communication technology utilizes key techniques such as RF energy harvesting, backscattering communication and low-power computing. Zero-power communication is characterized by obtaining energy by harvesting radio waves in the space to drive zero-power terminal devices to operate. Furthermore, zero-power communication may utilize backscattering communication and low-power computing technologies to make the zero-power terminals achieve an extremely simplified RF and baseband circuit structure. In short, zero-power communication is expected to achieve battery-less terminal devices to meet the communication needs of the Internet of things with ultra-low power consumption, very small size and ultra-low cost, which can greatly reduce the terminal cost, terminal size and circuit energy consumption.

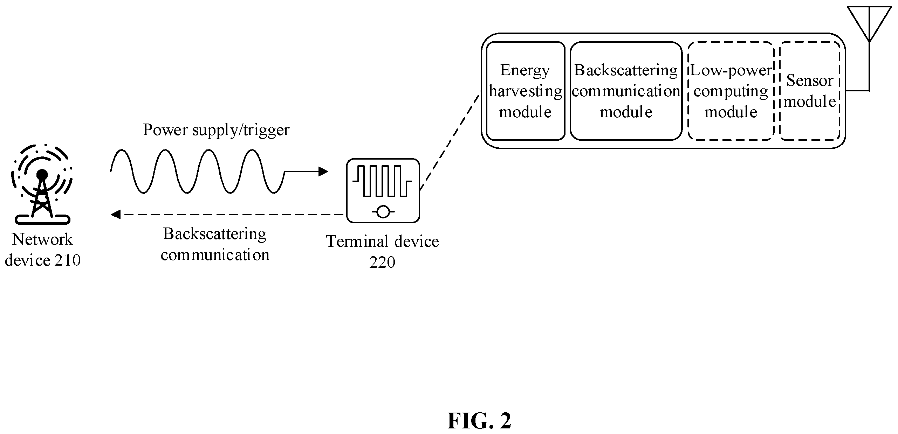

FIG. 2 is a schematic diagram of scenario of a zero power communication network. As illustrated in FIG. 2, the zero-power communication network may include a network device 110 and a terminal device 220, and the terminal device 220 is a zero-power device. The network device 210 may send a wireless power supply signal and a downlink communication signal (i.e., power supply/trigger) to the terminal device 220. After receiving the wireless power supply signal and the downlink communication signal sent by the network device 210, the terminal device 220 may send a backscattering signal to the network device 210. A basic zero-power terminal device 220 may include an energy harvesting module, a backscattering communication module, and a low-power computing module. In addition, the zero-power terminal device 220 may further include a sensor module for storing some basic information (e.g., item identification, etc.) or obtaining sensing data such as ambient temperature and ambient humidity. For example, the sensor module may be a memory or a sensor.

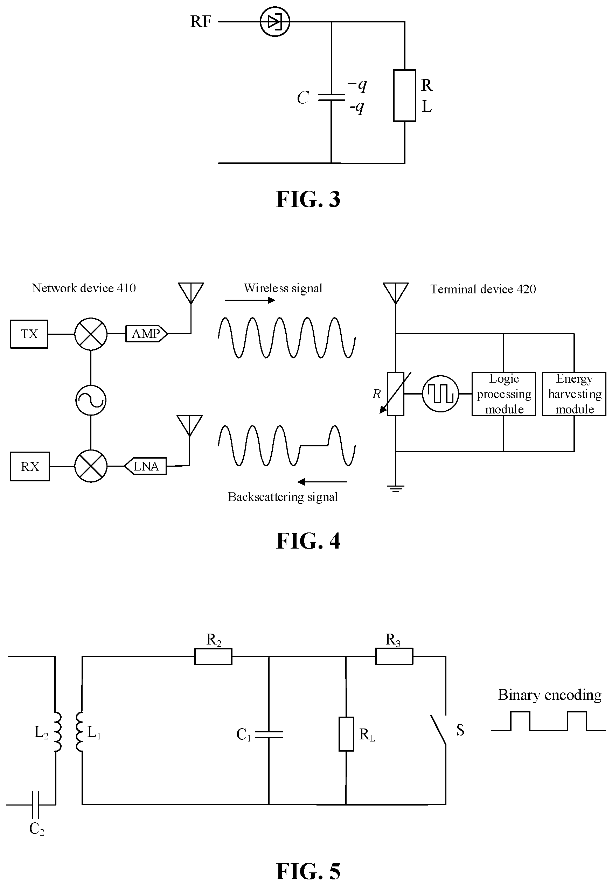

In the process of zero-power communication, the network device can send a wireless power supply signal and a downlink communication signal to a zero-power terminal device, and the zero-power terminal device can also send a backscattering signal to the network device. Therefore, the key of the zero-power communication lies in Radio Frequency (RF) energy harvesting and backscattering communication. RF energy harvesting and backscattering communication will be described below with reference to FIGS. 3 and 4, respectively.

FIG. 3 is a schematic diagram of a circuit structure of an RF power harvesting module. As illustrated in FIG. 3, the RF energy harvesting module may include a tunnel diode, a capacitor C (including positive electrode +q and negative electrode -q) and a resistor R_{L}. For the RF signal, the RF energy harvesting process can be completed through the tunnel diode. For example, the RF energy harvesting module may collect electromagnetic wave energy in the space based on the electromagnetic induction principle, to obtain energy required to drive the zero-power terminal device. For example, the energy may be used to drive a low-power demodulation and modulation modules, a sensor, a memory reader, and the like. It can be seen that the zero-power terminal device does not need conventional batteries.

FIG. 4 is a schematic diagram of a circuit structure of back scattering communication. As illustrated in FIG. 4, the backscattering communication may involve a network device 410 and a terminal device 420, and the terminal device 420 is a zero-power device. The network device 410 may include a Transmitter (TX), an Amplifier (AMP), a Receiver (RX), and a Low Noise Amplifier (LNA). The terminal device 420 may include a resistor R, a logic processing module, and an energy harvesting module. The terminal device 420 may receive a wireless signal transmitted by the network device 410, modulate the wireless signal, and radiate the modulated wireless signal (i.e., backscattering signal) from the antenna after loading information to be transmitted. This information transmission process is called backscattering communication.

In the embodiments of the present application, the backscattering and load modulation functions are inseparable. For the load modulation, circuit parameters of the oscillation loop for the zero power terminal device are adjusted and controlled according to the beats of the data stream, so that parameters, such as the magnitude of the electronic tag impedance, change accordingly, thereby completing the modulation process. The load modulation mainly includes two methods: resistance-based load modulation and capacitor-based load modulation.

FIG. 5 is a schematic diagram of a circuit structure of resistance-based load modulation. As illustrated in FIG. 5, the circuit structure may include an inductor L₁ and an inductor L₂, a capacitor C₁ and a capacitor C₂, a resistor R₂, a resistor R₃, and a load R_{L}. For resistance-based load modulation, the load R_{L} is connected in parallel to the resistor R₃. The switch S may be turned on or off based on the binary data stream (i.e., the binary data encoding), so as to control on or off of the resistor R₃. The on or off of the resistor R₃ would cause the circuit voltage to change, thus achieving Amplitude Shift Keying (ASK). That is, the amplitude of the backscattering signal of the zero-power terminal device may be adjusted to achieve modulation and transmission of signal.

Similarly, for capacitor-based load modulation, the capacitor is turned on or off to achieve a change in the circuit resonance frequency, which can achieve Frequency Shift Keying (FSK). That is, the operating frequency of the backscattering signal of the zero-power terminal device may be adjusted to achieve modulation and transmission of signal.

It is to be noted that the zero-power terminal device may perform information modulation on the incoming wave signal by means of load modulation, thereby achieving the backscattering communication. The zero-power terminal device mainly has the following advantages.
(1) The zero-power terminal device does not actively transmit signals, so it does not require complex RF structures, such as Power Amplifier (PA), RF filter, etc.
(2) The zero-power terminal device does not need to actively generate high-frequency signals, so it does not require high-frequency crystal oscillators.
(3) The zero-power terminal device can use backscattering communication, and it does not need to consume its own energy during signal transmission.

It should also be noted that, based on the current discussion of the 3rd Generation Partner Project (3GPP), based on whether a zero-power terminal device has energy storage capability and whether the zero-power terminal device has the capability of independently generating RF signals for RF signal transmission, the zero-power terminal device may be divided into the following two categories:
(1) A zero-power terminal device may have peak power consumption less than or equal to 1 microwatt (µW), and have energy storage capability. The maximum value of preliminary Sampling Frequency Offset (SFO) is 10 X Parts Per Million (PPM). It does not have the function of amplifying uplink and downlink RF signals, it does not have the capability to independently generate RF signals, and the RF signal transmission depends on backscattering.
(2) A zero-power terminal device may have peak power consumption less than or equal to several hundred µW, and have energy storage capability. The maximum value of preliminary SFO is 10 X PPM. It does not have the function of amplifying uplink and downlink RF signals, it has the capability to independently generate RF signals, and it can actively send RF signals, or the RF signal transmission depends on backscattering.

In a cellular network-based low-power IoT, the zero-power terminal device may communicate directly with the network device, or may communicate indirectly with the network devices via an intermediate node. Herein, the intermediate node may be a terminal device; or the intermediate node may be a network device (e.g., a base station).

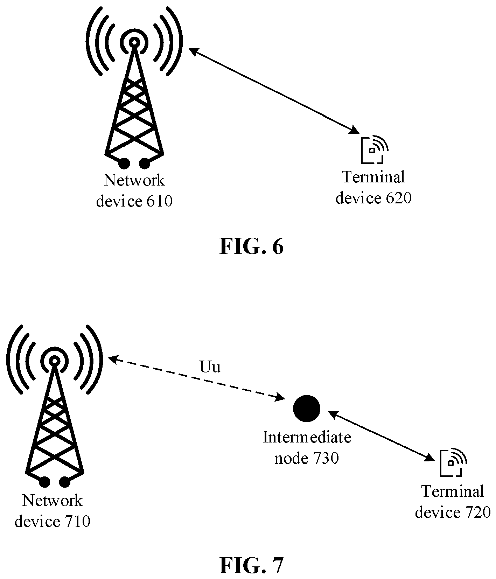

Exemplarily, as illustrated in FIG. 6, the terminal device 620 may directly receive data and/or signaling sent by the network device 610, and the terminal device 620 may also transmit or backscatter data and/or signaling to the network device 610. The terminal device 620 may be a zero-power terminal device.

Exemplarily, as illustrated in FIG. 7, the terminal device 720 may communicate with the network device 710 via the intermediate node 730. Data and/or signaling may be transmitted or received over a Uu link between the network device 710 and the intermediate node 730. The intermediate node 730 may transmit signaling to the terminal device 720 or receive data and/or signaling, and the terminal device 720 may also transmit or backscatter data and/or signaling to the intermediate node 730, thereby enabling forwarding of the data and/or signaling via the intermediate node 730. The terminal device 720 may be a zero-power terminal device.

It should be understood that in the embodiments of the present application, the terminal device may be referred to as a Tag, and the intermediate node may be referred to as a Reader. Here, the terminal device may be an A-IoT device (e.g., a zero-power terminal device), and the intermediate node may be a network device (e.g., a base station) or a relay device (e.g., a relay UE).

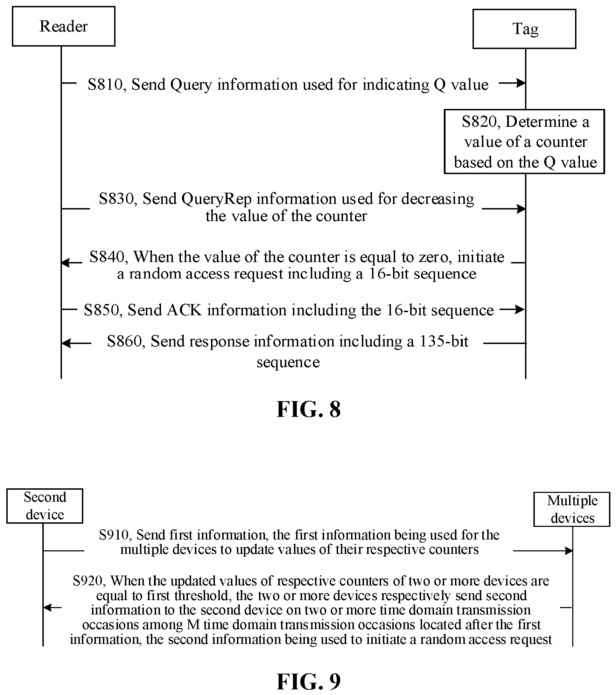

In the Radio-Frequency Identity Protocols (RFID) system, the Inventory is mainly used to identify the Tag. FIG. 8 is a schematic flow diagram of tag inventory in an RFID system. As illustrated in FIG. 8, the tag inventory may include the following operations S810, S820, S830, S840, S850, and S860.

In S810, a Reader transmits Query information to a Tag, and the Query information is used to indicate a Q value.

Correspondingly, the Tag may receive the Query information sent by the Reader.

Here, Q is a non-negative integer. For example, Q may take a number between 0 and 15.

It is to be noted that the Tag is in Arbitrate state in this case, and the Query information sent by the Reader may enable to start the inventory process.

It is also to be noted that the Query information may indicate other communication parameters in addition to the Q value.

Exemplarily, the other communication parameters may include tag rate, tag data encoding, and the like. Here, the tag data encoding may be Frequency Modulation (FM) 0 encoding or Miller encoding.

In S820, the Tag determines a value of a Counter based on the Q value.

For example, the Tag may select a number between 0 and 2^{*Q*-1} as the value of the counter.

In S830, the Reader sends QueryRep information to the Tag. The QueryRep information is used to decrease the value of the counter.

Correspondingly, the Tag may receive the QueryRep information sent by the Reader.

Exemplarily, the Tag may subtract the value of the counter by 1.

In S840, when the value of the counter is equal to 0, the Tag initiates a random access request to the Reader. The random access request includes a 16-bit sequence.

Correspondingly, the Reader may receive the random access request initiated by the Tag.

It is to be noted that when the value of the counter is equal to 0, the Tag may backscatter and send a random 16-bit sequence (i.e., RN16) in plaintext.

It is also be noted that in this case, the Tag enters Reply state from the Arbitrate state.

In S850, the Reader sends acknowledgement (ACK) information to the Tag. The ACK information includes the above 16-bit sequence.

Correspondingly, the Tag may receive the ACK information sent by the Reader.

It is to be noted that the Tag can confirm that the 16-bit sequence in the ACK information is the same as the 16-bit sequence sent to the Reader, and the Tag can thus determine that random access is successful.

It is also to be noted that the Tag enters a confirmation state from the Reply state in this case.

In S860, the Tag sends response information to the Reader. The response information includes a 135-bit sequence.

Correspondingly, the Reader may receive the response information sent by the Tag.

The 135-bit sequence may include a sequence of an Evolved Packet Core (EPC) (Tag ID is 96 bits) and a Cyclic Redundancy Check (CRC).

It should be understood that through operations S810 to S860, the Reader may successfully identify the Tag, and then the Reader may perform a read/write operation on the Tag as needed.

As can be seen from FIG. 8, in the RFID system, the Tag inventory process may include a random access procedure for the Tag, and read/write operations performed by the Reader on the Tag after the Tag successfully accesses the Reader. In terms of the capabilities and application scenarios of terminal devices, A-IoT system is quite similar to the RFID system. Therefore, the Tag inventory process in the RFID system may be reused for the Tag inventory in the A-IoT system. However, this Tag inventory process has some disadvantages: because RFID supports short-distance communication, typically with a communication distance of a few meters, large-scale Tag inventory requires traversing all tags through hand-held scanning, resulting in high labor costs and being time-consuming. It can also be seen from the above Tag inventory that the Tag inventory is performed in a time division manner, where every time the Reader sends Query information, one or more Tags may respond to the Query information, and when multiple tags respond to the Query information simultaneously, at most one Tag can succeed in contention. The Reader may start the inventory of a next Tag by sending another Query information again after completing the inventory of that tag.

That is to say, in related art, the Tag inventory is performed in a time-division manner, where each downlink information transmission by the Reader can at most initiate inventory of one tag, and after the inventory of that one tag is completed, another downlink information transmission is required to start the inventory of a next tag. Thus, based on this Tag inventory process, the random access efficiency of tags is reduced, and overhead of downlink signaling is also increased.

In view of this, according to the communication method provided the embodiments of the present application, a first device can receive first information sent by a second device, and the first information is used for multiple devices to update values of their respective counters; and when the updated value of a counter of the first device is equal to the first threshold, the first device sends second information to the second device on a first time domain transmission occasion among M time domain transmission occasions located after the first information, the second information being used to initiate a random access request; where the multiple devices include the first device, and M is an integer greater than 1. In this way, based on the first information sent by the second device, the first device can send the second information on the first time domain transmission occasion among the M time domain transmission occasions, so that other devices can also send second information to the second device on time domain transmission occasions, other than the first time domain transmission occasion, among the M time domain transmission occasions. Therefore, the random access efficiency of multiple devices is improved, and the overhead caused by the second device sending downlink information is reduced.

In order to facilitate understanding of the technical solution of the embodiments of the present application, the technical solution of the present application e will be described in detail by specific embodiments below. The above related technologies may be combined with the technical solution of the embodiments of the present application arbitrarily as optional solutions, all of which belong to the protection scope of the embodiments of the present d application. Embodiments of the present application include at least some of the following.

FIG. 9 is a schematic flowchart of a communication method provided by an embodiment of the present application. As illustrated in FIG. 9, the method may include following operations S910, S920.

In S910, a second device sends first information to multiple devices, where the first information is used for the multiple devices to update values of their respective counters.

Accordingly, the multiple devices (e.g., a first device) may receive the first information sent by the second device.

The second device may be an intermediate node, and the intermediate node may be referred to as a Reader. Further, the second device may be a network device (e.g., a base station) or a relay device (e.g., a relay UE).

It should also be noted that the multiple devices (e.g., the first device) may be referred to as Tag. Further, the multiple devices may be A-IoT devices (e.g., zero-power terminal devices).

Exemplarily, the first information may be one of Query information, QueryRep information, and QueryAdjust information.

In some embodiments, the first information may be used to reduce the values of respective counters of the multiple devices.

Exemplarily, after receiving the first information, the multiple devices (e.g., the first device) may each subtract the value of each of their respective counters by 1.

In some embodiments, before the second device sends the first information, the method may further include that: the second device sends fourth information to the multiple devices, where the fourth information is used to indicate a second threshold, and the second threshold is used for the multiple devices to determine the values of their respective counters.

Correspondingly, the multiple devices (e.g., the first device) may receive the fourth information sent by the second device before receiving the first information.

The second threshold may be specified by a protocol, or may be determined in another manner, which is not limited in the embodiments of the present application.

Exemplarily, the second threshold may be a Q value. For each of the multiple devices (e.g., the first device), it may select a number between 0 to 2^{*Q*-1} as the value of its respective counter.

Exemplarily, the fourth information may be Query information.

The fourth information may indicate other communication parameters in addition to the second threshold. The other communication parameters may include tag rate, tag data encoding, and the like. Here, the tag data encoding may be an FM0 encoding or Miller encoding.

Through this method, the multiple devices (e.g., the first device) can determine the values of the their respective counters based on the second threshold indicated by the second device, and can then update the values of their respective counters based on the subsequently received first information.

In S920, when the updated values of respective counters of two or more devices are equal to the first threshold, the two or more devices send second information to the second device on two or more time domain transmission occasions among M time domain transmission occasions located after the first information, where the second information is used to initiate a random access request.

Correspondingly, the second device may receive the second information sent by the two or more devices respectively on the two or more time domain transmission occasions.

Here, M is an integer greater than 1.

Here, the two or more devices belong to the multiple devices.

The first threshold may be specified by a protocol or may be determined in another manner, which is not limited in the embodiments of the present application.

Exemplarily, the first threshold may be 0.

Taking the first device among the two or more devices as an example, when the updated value of a counter of the first device is equal to the first threshold, the first device may send second information to the second device on a first time domain transmission occasion among the two or more time domain transmission occasions, where the second information is used to initiate a random access request.

Correspondingly, the second device may receive the second information sent by the first device on the first time domain transmission occasion.

It should be understood that, if the value of the counter determined by the first device based on the second threshold is equal to the first threshold, then after receiving the first information, the first device may not update the value of the counter, or may perform a decrement-by-zero operation on the value of the counter.

It should also be understood that the two or more devices may select different time-domain transmission occasions (i.e., select two or more time-domain transmission occasions) from the M time-domain transmission occasions, so that they can respectively send second information to the second device on their respectively selected time-domain transmission occasions, thereby avoiding competition when selecting the same time-domain transmission occasion, and improving random access efficiency.

Through the method, based on the first information sent by the second device, two or more devices can respectively send second information to the second device on their respectively selected time domain transmission occasions, thereby improving the random access efficiency of multiple devices and reducing the overhead of the second device sending downlink information.

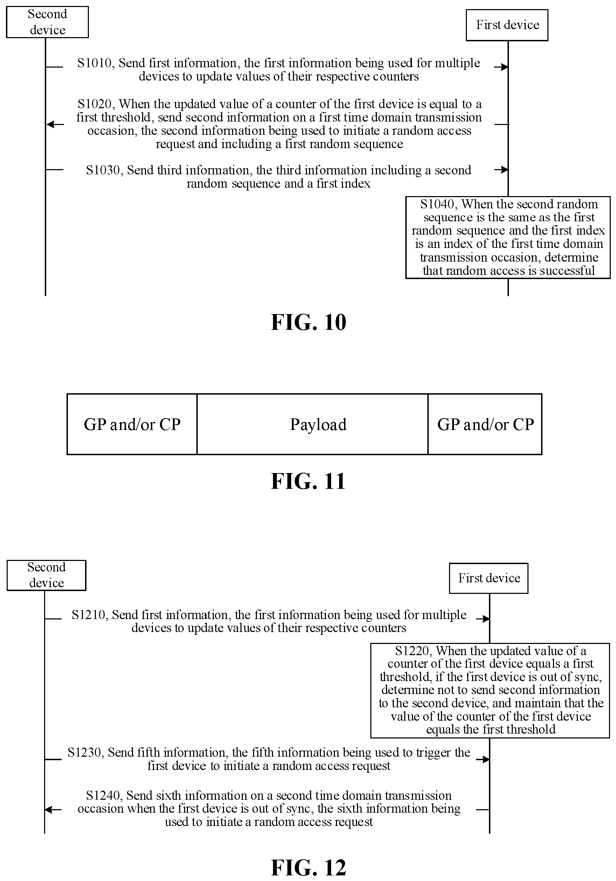

In the following, taking the first device among the two or more devices as an example, the detailed process of the first device determining that random access is successful is described. FIG. 10 is a first detailed schematic flowchart of a communication method provided by an embodiment of the present application. As illustrated in FIG. 10, the method may include operations S1010, S1020, S1030, and S1040.

In S1010, a second device sends first information to a first device, where the first information is used for multiple devices to update values of their respective counters.

In S1020, when the updated value of a counter of the first device is equal to a first threshold, the first device sends second information to the second device on a first time domain transmission occasion, where the second information is used to initiate a random access request, and the second information includes a first random sequence.

In S1030, the second device sends third information to the first device, where the third information includes a second random sequence and a first index.

In S1040, when the second random sequence is the same as the first random sequence and the first index is an index of the first time domain transmission occasion, the first device determines that its random access is successful.

Correspondingly, the first device may receive the third information sent by the second device.

It is to be noted that for operations S1010 and S1020, reference may be made to the descriptions of operations S910 and S920 in the foregoing embodiments, which are not repeated here in the embodiments of the present application.

Exemplarily, the first random sequence may be a 16-bit sequence. When the value of the counter is equal to 0, the first device may backscatter on the first time domain transmission occasion, and transmit a random 16-bit sequence in plaintext.

It is to be noted that the first random sequence may be a random number, a random code, or a preamble, which is not limited in the embodiments of the present application.

In some embodiments, the first random sequence may be generated by the first device, or may be selected by the first device from a set of sequences configured by the second device.

Exemplarily, the first device may generate a random number or random code; or, the first device randomly selects a code from a set of codes (e.g., preambles) configured by the second device.

Exemplarily, the third information may be ACK information.

It is to be noted that similar to the first random sequence, the second random sequence may be a random number, a random code, or a preamble, which is not limited in the embodiments of the present application.

Exemplarily, the second random sequence may be a 16-bit sequence.

It is to be noted that, when the second random sequence is different from the first random sequence, and/or the first index is not the index of the first time domain transmission occasion, the first device may determine that the random access fails. In this case, the first device may wait to receive downlink information again, to initiate a random access request to the second device based on the re-received downlink information.

It should also be noted that after operation S1040, the first device may send response information to the second device, the response information including a 135-bit sequence, so that the second device may successfully identify the first device and may subsequently perform read/write operation on the first device.

Correspondingly, the second device may receive the response information sent by the second device.

Here, the 135-bit sequence may include sequences of EPC and CRC.

Through this method, similar to the first device, other devices can also determine whether they can perform random access successfully by comparing whether the received random sequence is the same as the random sequence sent to the second device and whether the received index is the same as an index of the time-domain transmission occasion on which the second information is sent. When determining that the received random sequence is the same as the random sequence sent to the second device, and the received index is the same as the index of the time-domain transmission occasion on which the second information is sent, the other devices may determine that the random access is successful. In this way, the random access efficiency of multiple devices is improved and the overhead of the second device sending downlink information is also reduced.

In some embodiments, the two or more devices may further include a third device, and the third information may further include a third random sequence and a second index. The third random sequence and the second index are used for the third device to determine that random access was successful, and the third random sequence and the second index are concatenated with the second random sequence and the first index.

It is to be noted that the second device may send the third information to the third device. Correspondingly, the third device may receive the third information sent by the second device.

It should be understood that the third random sequence and the second index being used for the third device to determine that the random access is successful, may be understood as that: in a case where the third random sequence is the same as the fourth random sequence and the second index is an index of the fourth time domain transmission occasion, the third device may determine that the random access is successful. Herein, the fourth random sequence is a random sequence included in the second information sent by the third device to the second device, and the fourth time domain transmission occasion is used for the third device to send the second information to the second device.

It is to be noted that the second random sequence and the first index may be regarded as a response for the first device, and the third random sequence and the second index may be regarded as a response for the third device. The third information may include only the second random sequence and the first index. In this case, the third information corresponds to a response for one device (i.e., the first device), and the third random sequence and the second index may be included in other information.

Further, in addition to the second random sequence and the first index, the third information may include other random sequences and indexes (e.g., the third information may also include the third random sequence and the second index). In this case, responses for multiple devices may be concatenated into the third information (e.g., the third random sequence and the second index are concatenated with the second random sequence and the first index).

Through this method, when the third random sequence and the second index are concatenated with the second random sequence and the first index into the third information, the overhead of downlink information can be saved.

In some embodiments, the second device sending the third information to the first device may include that: the second device sends the third information to the first device after receiving the second information sent by the first device; or the second device sends the third information to the first device after the M time domain transmission occasions end.

Correspondingly, the third information may be monitored by the first device starting after the second information is sent, or the third information may be monitored by the first device starting after the end of the M time-domain transmission occasions.

It is to be noted that when the second device sends the third information to the first device after receiving the second information sent by the first device, the first device may start monitoring the third information after sending the second information, or the first device may start monitoring the third information after the M time domain transmission occasions end.

It is also to be noted that when the second device sends the third information to the first device after the end of the M time domain transmission occasions, the first device may start monitoring the third information after sending the second information (in which case the third information may not be detected before the end of the M time domain transmission occasions), or the first device may start monitoring the third information after the end of the M time domain transmission occasions.

In the related art, on one hand, in order to reduce the cost of multiple devices, because the multiple devices has poor clock synchronization capability and they generally cannot maintain accurate clock synchronization for a long time, it is required to fully consider respective clock deviations between the multiple devices for the format design of uplink information (e.g., the second information). On the other hand, due to distance deviations between the multiple devices and one intermediate node within the coverage of the intermediate node (e.g., the second device), if an uplink synchronization mechanism is not introduced (i.e., assuming that the uplink timing (UL Timing) is aligned with the downlink timing (DL Timing) for the multiple devices), then impact of the near-far effect also needs to be considered for the format design of uplink information (e.g., the second information). Based on the factors in the above two hands, the format of uplink information (e.g., the second information) can be defined in the embodiments of the present application.

In some embodiments, the format of the uplink information (e.g., the second information), may include a guard interval and/or a cyclic prefix, and a payload.

In the following, the format design of the uplink information in the embodiments of the present application will be described by taking the second information as an example.

It is to be noted that when the second information is sent by the first device, the format of the second information may include a first guard interval and/or a first cyclic prefix, and a first payload, where the first payload is used to carry the first random sequence.

FIG. 11 is a schematic diagram of a format of second information provided by an embodiment of the present application. As illustrated in FIG. 11, the format of the second information may be divided into three parts, the first part is Guard Period (GP) and/or Cyclic Prefix (CP), the third part is GP and/or CP, and the middle part (i.e., the second part) is Payload.

In some embodiments, the second information is sent respectively by two or more devices, and the second information includes one or more formats.

Different formats of the second information correspond to different total lengths of the second information; and/or
different formats of the second information correspond to different lengths of guard interval; and/or
different formats of the second information correspond to different lengths of cyclic prefix.

It should be understood that the format of the uplink information may be specified by a protocol, and multiple formats of the uplink information may be defined for different terminal capabilities (e.g. clock synchronization capability) and/or different coverage sizes of the intermediate node (e.g., the second device). The two or more devices may determine the format of the second information from multiple formats of uplink information specified by the protocol based on their own capabilities and/or coverage of the second device.

Based on this, in some embodiments, the format of the second information is determined based on respective capabilities of the two or more devices; and/or the format of the second information is based on broadcast configuration from the second device.

Exemplarily, the protocol may specify different formats of uplink information for devices with different capabilities. The two or more devices may select, based on their respective capabilities, a format of the second information that matches their respective capabilities from multiple formats of uplink information specified by the protocol.

Exemplarily, the protocol may specify different formats of uplink information for intermediate nodes (e.g., the second device) with different coverage ranges. The second device may configure, based on its supported coverage range, one format of the second information for the two or more devices by means of broadcast, so that the two or more devices can use the format of the second information broadcast by the second device.

It is to be noted that taking the first device among the two or more devices as an example, the second information may be sent by the first device, and the format of the second information is determined based on the capability of the first device; and/or the format of the second information is configured based on broadcast from the second device.

Through this method, in a case where the format of the second information is determined based on respective capabilities (e.g., clock synchronization capability) of the two or more devices (e.g., the first device), the format design of the second information sufficiently takes into account respective clock deviations of the two or more devices; and/or, in a case where the format of the second information is configured based on broadcast from the second device, the format design of the second information sufficiently takes into account the distance deviations between the two or more devices and the second device, thereby improving system performance.

In some embodiments, the M time domain transmission occasions do not overlap each other in time.

Exemplarily, the M time-domain transmission occasions are consecutive in time. The M time-domain transmission occasions may be numbered as slot m in chronological order, where 0 <= m <M. That is, the first time-domain transmission occasion may be denoted as slot 0, the second time-domain transmission occasion may be denoted as slot 1, ..., and the M-th time-domain transmission occasion may be denoted as slot M-1.

It is to be noted that time duration of each of the M time domain transmission occasions may be specified by a protocol. For example, the protocol specifies time durations for slot 0, slot 1, ..., slot M-1.

Through the method, the two or more devices may select different time-domain transmission occasions (i.e., two or more time-domain transmission occasions) from M time-domain transmission occasions, so that they can respectively send the second information to the second device on their respectively selected time-domain transmission occasions. In this way, competition when selecting the same time-domain transmission occasions is avoided, time division multiplexing is realized, and random access efficiency is improved.

In some embodiments, the value of M is specified by a protocol, or is broadcast by the second device.

In some embodiments, the two or more devices respectively sending the second information to the second device, may include that: the two or more devices respectively send the second information to the second device when the two or more devices (e.g., the first device) are synchronized.

It should be understood that the two or more devices being synchronized may be understood as that the two or more devices are synchronized with the second device. That is, for each of the two or more devices, its respective clock is synchronized with the clock of the second device.

Further, when the difference between the respective clocks of the two or more devices and the clock of the second device is less than the fourth threshold, it may be considered that the two or more devices are synchronized.

Herein, the fourth threshold may be specified by a protocol or may be determined in another manner, which is not limited in the embodiments of the present application.

It is to be noted that for two or more devices that have triggered random access (for example, the updated values of counters corresponding to each of the two or more devices are equal to the first threshold), the two or more devices may, when synchronized, respectively send the second information to the second device.

It should be understood that for two or more devices that have triggered random access, if the two or more devices are out of sync, they may not send the second information to the second device (i.e., the random access fails for the two or more devices due to out of synchronization), and may either initiate the next random access request immediately upon receiving downlink information the next time, or re-determine the values of their counters.

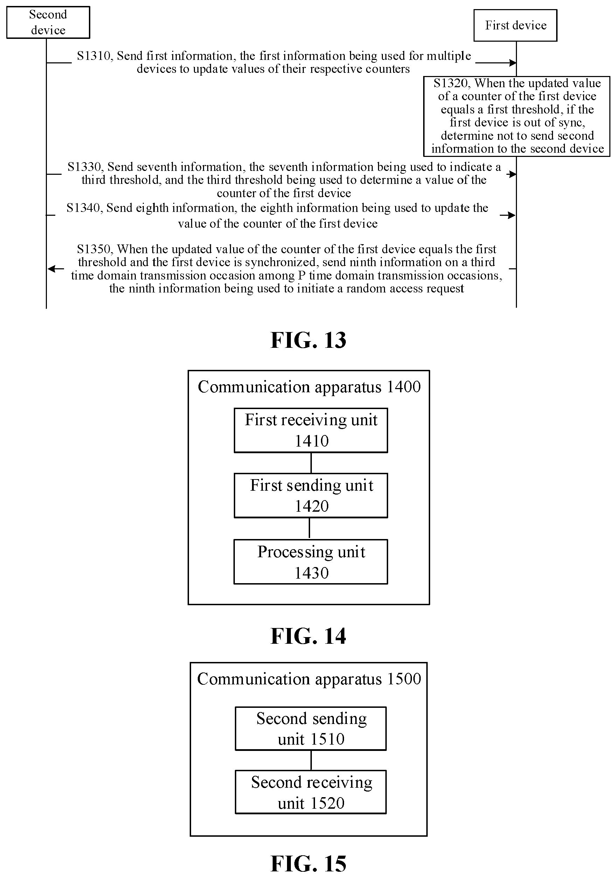

In the following, taking the first device among the two or more devices as an example, two manners where the first device initiates a random access request again when the first device is out of synchronization are described with reference to FIGS. 12 and 13.

FIG. 12 is a second detailed schematic flowchart of a communication method provided by an embodiment of the present application. As illustrated in FIG. 12, the method may include following operations S1210, S1220, S1230, and S1240.

In S1210, a second device sends first information to a first device, where the first information is used for multiple devices to update values of their respective counters.

In S1220, when the updated value of a counter of the first device is equal to a first threshold, if the first device is out of synchronization, the first device does not send second information to the second device and maintains that the value of the counter of the first device is equal to the first threshold.

In S1230, the second device sends fifth information to the first device, where the fifth information is used to trigger the first device to initiate a random access request.

In S1240, when the first device is synchronized, the first device sends sixth information to the second device on a second time domain transmission occasion among N time domain transmission occasions, where the sixth information is used to initiate a random access request.

Here, N is an integer greater than 1.

Correspondingly, the first device may receive the fifth information sent by the second device.

Correspondingly, the second device may receive the sixth information sent by the first device on the second time domain transmission occasion.

It should be understood that for operation S1210, reference may be made to the description of S910 in the foregoing embodiments, which will not be repeated here in the embodiments of the present application.

It should also be understood that the first device being out of synchronization may be understood as that: the first device is out of synchronization with the second device. That is, a clock of the first device is out of synchronization with a clock of the second device.

Further, when a difference between the clock of the first device and the clock of the second device is greater than or equal to a fourth threshold, it may be considered that the first device is out of synchronization.

It is to be noted that, if the first device does not send the second information on the first time domain transmission occasion due to out of synchronization, it means that the first device has already been in an out-of-sync state on time-domain transmission occasions prior to the first time-domain transmission occasion. In this case, the first device may consider that the current random access has failed, maintain that the value of the counter of the first device is equal to the first threshold, and wait to receive the fifth information sent by the second device.

Further, from operations S1220 to S1240, the first device may transition from an out-of-sync state to a synchronized state. It should be understood that synchronization of the first device may be realized by adjusting clock frequency and phase, or by other methods, which are not limited in the embodiments of the present application.

Through the method, for the first device that has triggered random access (for example, the updated value of the counter of the first device is equal to the first threshold), if the first device fails in random access due to out of synchronization, the first device may initiate the next random access request on the second time domain transmission occasion upon receiving the fifth information and when synchronized, thereby improving the random access efficiency of multiple devices

FIG. 13 is a third detailed schematic flowchart of a communication method provided by an embodiment of the present application. As illustrated in FIG. 13, the method may include following operations S1310, S1320, S1330, S1340, and S1350.

In S1310, a second device sends first information to a first device, where the first information is used for multiple devices to update values of their respective counters.

In S1320, when the updated value of a counter of the first device is equal to a first threshold, if the first device is out of synchronization, the first device does not send second information to the second device.

In S1330, the second device sends seventh information to the first device, where the seventh information is used to indicate a third threshold, and the third threshold value is used to determine a value of the counter of the first device.

In S1340, the second device sends eighth information to the first device, and the eighth information is used to update the value of the counter of the first device;

S1350, when the updated value of the counter of the first device is equal to the first threshold and the first device is synchronized, the first device sends ninth information to the second device on a third time domain transmission occasion among P time domain transmission occasions, where the ninth information is used to initiate a random access request.

Here, P is an integer greater than 1.

Herein, the third threshold may be specified by a protocol, or may be determined in another manner, which is not limited in the embodiments of the present application.

Correspondingly, the first device may receive the seventh information sent by the first device.

Correspondingly, the first device may receive the eighth information sent by the second device.

Correspondingly, the second device may receive the ninth information sent by the first device on the third time domain transmission occasion.

It should be understood that for operation S1310, reference may be made to the description of operation S910 in the foregoing embodiments, which will not be repeated here in the embodiments of the present application.

It is to be noted that, if the first device does not send the second information on the first time domain transmission occasion due to out of synchronization, it means that the first device has already been in an out-of-sync state on time-domain transmission occasions prior to the first time-domain transmission occasion. In this case, the first device may consider that the current random access has failed, and wait to receive the seventh information and the eighth information sent by the second device.

It is also to be noted that after determining not to send the second information to the second device, the first device may maintain that the value of the counter is equal to the first threshold, or may set the value of the counter to a maximum value, or may set the value of the counter to an invalid value, and wait to receive the seventh information, so as to re-determine the value of the counter based on the third threshold indicated by the seventh information.

It should be understood that the third threshold and the second threshold may be the same parameter value or different parameter values, which is not limited in the embodiments of the present application.

Exemplarily, the third threshold may be a Q value. The first device may select a number between 0 to 2^{*Q*-1} respectively, as the value of the counter.

The seventh information may indicate other communication parameters in addition to the third threshold. The other communication parameters may include tag rate, tag data encoding, and the like. Here, the tag data encoding may be FMO encoding or Miller encoding.

Further, from operations S1320 to S1350, the first device may transition from an out-of-sync state to a synchronized state. It should be understood that synchronization of the first device may be realized by adjusting clock frequency and phase, or by other methods, which are not limited in the embodiments of the present application.

In some embodiments, the eighth information may be used to decrease the value of the counter of the first device.

It should be understood that if the value of the counter determined by the first device based on the third threshold is equal to the first threshold, then after receiving the eighth information, the first device may not update the value of the counter, or may subtract the value of the counter by 1.

Through the method, for the first device that has triggered random access (for example, the updated value of the counter of the first device is equal to the first threshold), if the first device fails in random access due to out of synchronization, the first device may initiate the next random access request on the third time domain transmission occasion based on the seventh information and the eighth information, thereby improving the random access efficiency of multiple devices

In the following, by taking an example where the multiple devices (e.g., the first device) are A-IoT device and the second device is a Reader, the communication method provided by the embodiments of the present application will be described in detail in combination with specific application scenarios.

A-IoT device maintains the value of a counter and updates the value of the counter based on the received Query information (i.e. the first information). When the updated value of the counter is equal to 0 (i.e., the first threshold), the A-IoT device initiates a random access request, randomly selects a first time domain transmission occasion from multiple time domain transmission occasions for the second information located after the Query information, and sends the second information to a Reader.

The A-IoT device receives third information sent by the Reader, and if the second random sequence and the first index indicated in the third information both match the first random sequence in the second information and the index of the first time domain transmission occasion, the A-IoT device considers that the random access is successful (or the contention resolution is successful). The method may specifically include following steps (1), (2), (3), and (4).
(1) The A-IoT device maintains the value of one counter. Each time the A-IoT device receives Query information, it may subtract the value of the counter by one, where the Query information may also be QueryRep information or QueryAdjust information.
(2) After execution of step (1), if the value of the counter is equal to 0, the A-IoT device responds to current Query information. That is, the A-IoT device initiates a random access request, and continues executing step (3).
(3) Assuming that there are M time domain transmission occasions for the second information after the current Query information, the M second information time domain transmission occasions do not overlap each other in time. Further, the M time-domain transmission occasions for the second information are consecutive in time, and the M time-domain transmission occasions for the second information may be numbered as slot m in chronological order, where 0 <= m <M. That is, the first time-domain transmission occasion may be denoted as slot 0, the second time-domain transmission occasion may be denoted as slot 1, ..., and the M-th time-domain transmission occasion may be denoted as slot M-1.

In some embodiments, the value of M may be predefined by a protocol or broadcast by a Reader (where the Reader may be a base station or a relay UE), and time duration of one slot may be predefined by protocol.

The A-IoT device randomly selects a first time domain transmission occasion from the M time domain transmission occasions for the second information located after the current Query information, and sends the second information on the first time domain transmission occasion, where the second information may include a first random sequence. The first random sequence may be a random number or a random code generated by the A-IoT device itself, or may be a code randomly selected by the A-IoT device from a set of codes (e.g., preambles) configured by the Reader.

(4) After sending the second information to the Reader, the A-IoT device may start monitoring third information. The third information may include a second random sequence and a first slot index, and the second random sequence may be a random number or a random code or a (preamble) code.

The A-IoT device receives the third information sent by the Reader. If the second random sequence in the third information is the same as the first random sequence, and the first index in the third information is an index of the first time domain transmission occasion, then the A-IoT device considers that the access is successful or the contention resolution is successful.

It is to be noted that for monitoring of the third information, the A-IoT device may start monitoring the third information after sending the second information, or may start monitoring the third information after the end of the M time domain transmission occasions located after the current Query information.

The format design of the third information may be such that one piece of third information corresponds to a response for one A-IoT device, or responses for multiple A-IoT devices may be concatenated into one piece of third information.

Format definition of uplink information (e.g., the second information): it consists of three parts. The first part is GP and/or CP, the third part is GP and/or CP, and the middle part is Payload.

On the one hand, in order to reduce the cost of A-IoT devices, the A-IoT devices have poor clock synchronization capability and they generally cannot accurately maintain time synchronization for a long time, and thus, clock deviations between the A-IoT devices needs to be fully considered for the format design of uplink information. On the other hand, because distance deviations between different A-IoT devices within the coverage of the same Reader and the Reader varies, if the uplink synchronization mechanism is not introduced (i.e., it is considered that the UL Timing and DL Timing are aligned for different A-IoT devices), then the impact of near-far effect also needs to be considered for the format design of uplink information. Based on the factors in the above two hands, it is considered to define the following format of uplink information.

As illustrated in FIG. 11, the format of uplink information may be divided into three parts. The first part is GP and/or CP, the third part is GP and/or CP, and the second part in the middle is Payload. In a case where the uplink information is the second information, the second part may be used to carry the first random sequence.

It is to be noted that depending on different terminal capabilities (e.g., clock synchronization capability) and/or the coverage size of the Reader, multiple formats of uplink information may be defined. The difference between different formats of uplink information is mainly reflected in one or more of the following aspects:
(1) the total lengths of uplink information are different;
(2) the lengths of first parts are different; or
(3) the lengths of third parts are different.

For example, different formats of uplink information are defined for A-IoT devices with different clock synchronization capabilities. An A-IoT device may select a format of uplink information that matches its own clock synchronization capability.

For another example, different formats of uplink information are defined for different coverage ranges of the Reader, and the Reader may configure, through broadcast, one format of uplink information according to its supported coverage range. Then, A-IoT devices served by the Reader may all use the format of uplink information broadcast by the Reader.

In a case where an A-IoT device fails in random access due to out of synchronization and upon receiving Query information next time, the A-IoT device either initiates the next random access request immediately, or re-generates a value of the counter.

For an A-IoT device that has triggered random access (e.g., the value of a counter of the A-IoT device is equal to 0), the A-IoT device sends the second information only when it is synchronized. If the A-IoT device does not send the second information on the selected first time domain transmission occasion due to out of synchronization (e.g., the A-IoT device selects slot M-1, but it has already been in out-of-sync state before slot M-1), then the A-IoT device considers that this random access attempt has failed.

Further, when the A-IoT device receives Query information (i.e., the fifth information) next time, it maintains that the value of the counter is equal to 0, that is, the A-IoT device initiates another random access request upon receiving the next Query; or, the A-IoT device sets the value of the counter to a maximum value. Upon receiving Query information (i.e., the seventh information) again, it may re-generate a random number according to the Q value (i.e., the third threshold) indicated by the Query information, and reset the value of the counter to that random number.

An embodiment of the present application provides a terminal access method based on time division multiplexing in an A-IoT system, which may include the following steps (1), (2), (3), (4), and (5).
(1) A-IoT device maintains the value of a counter and updates the value of the counter based on the received Query information. When the value of the counter is equal to 0, the A-IoT device initiates a random access request, randomly selects a first time domain transmission occasion from multiple time domain transmission occasions for the second information located after the Query information, and sends the second information to a Reader.
(2) The A-IoT device receives third information sent by the Reader. If the second random sequence and the first index indicated in the third information match the first random sequence in the second information and an index of the first time domain transmission occasion, the A-IoT device considers that the random access is successful (or the contention resolution is successful).
(3) Format definition of uplink information (e.g., the second information): it consists of three parts. The first part is GP and/or CP, the third part is GP and/or CP, and the middle part is Payload.
(4) Depending on different terminal capabilities (e.g., clock synchronization capability) and/or the coverage size of the Reader, multiple formats of uplink information may be defined.
(5) In a case where an A-IoT device fails in random access due to out of synchronization, the A-IoT device either initiates the next random access request immediately upon receiving Query information next time, or re-generates a value of the counter.

The embodiment of the present application provides a terminal access method based on time division multiplexing in an A-IoT system. Through this method, a single Query information is allowed to trigger multiple A-IoT devices to initiate random access requests in a time-division multiplexing manner, thereby improving the working efficiency of the A-IoT system while also saving downlink signaling overhead (e.g., overhead of the Query information).

The preferred embodiments of the present application have been described in detail above with reference to the accompanying drawings, but the present application is not limited to the specific details in the above-described embodiments. Various simple modifications can be made to the technical solutions of the present application within the scope of the technical concept of the present application, and these simple modifications all fall within the scope of protection of the present application. For example, various specific technical features described in the above-described detailed description may be combined in any suitable manner without contradiction, and various possible combinations will not be described separately in this application in order to avoid unnecessary repetition. For another example, various embodiments of the present application may be combined arbitrarily, and as long as they do not violate the idea of the present application, they should also be regarded as the application of the present application. For another example, on the premise that there is no conflict, various embodiments described in the present application and/or the technical features in each embodiment may be arbitrarily combined with the prior art, and the technical solution obtained after the combination should also fall within the scope of protection of the present application.

It should also be understood that in various method embodiments of the present application, the size of the sequence numbers in the above-described processes does not mean the order of execution, and the order of execution of various processes should be determined by their functions and internal logics, and should not constitute any limitation on the implementation of the embodiments of the present application.

FIG. 14 is a schematic diagram of structural composition of a communication apparatus 1400 provided by an embodiment of the present application, which is applied to a first device. As illustrated in FIG. 14, the communication apparatus 1400 includes a first receiving unit 1410 and a first sending unit 1420

The first receiving unit 1410 is configured to receive first information sent by a second device, the first information being used for multiple devices to update values of their respective counters.

The first sending unit 1420 is configured to: when the updated value of a counter of the apparatus is equal to a first threshold, send second information to the second device on a first time domain transmission occasion among M time domain transmission occasions located after the first information, the second information being used to initiate a random access request. Herein, the multiple devices include the apparatus, and M is an integer greater than 1.

In some embodiments, the second information includes a first random sequence. The first random sequence is generated by the first device, or selected by the first device from a set of sequences configured by the second device.

In some embodiments, as illustrated in FIG. 14, the terminal device 1400 further includes a processing unit 1430.

The first receiving unit 1410 is further configured to receive third information sent by the second device, the third information including a second random sequence and a first index.

The processing unit 1430 is configured to determine that random access is successful, when the second random sequence is the same as the first random sequence and the first index is an index of the first time domain transmission occasion.

In some embodiments, the plurality of devices further includes a third device, and the third information may further include a third random sequence and a second index. The third random sequence and the second index are used for the third device to determine that the random access was successful, and the third random sequence and the second index are concatenated with the second random sequence and the first index.

In some embodiments, the third information is monitored starting after the second information is sent, or after the M time domain transmission occasions end.

In some embodiments, the format of the second information includes a first guard interval and/or a first cyclic prefix, and a first payload. The first payload is used to carry the first random sequence.

In some embodiments, the format of the second information is determined based on a capability of the first device; and/or the format of the second information is based on broadcast configuration from the second device.

In some embodiments, before receiving the first information, the first receiving unit 1410 is further configured to receive fourth information sent by the second device, where the fourth information is used to indicate a second threshold, and the second threshold is used for the multiple devices to determine the values of their respective counters.

In some embodiments, the M time domain transmission occasions do not overlap each other in time.

In some embodiments, the value of M is specified by a protocol, or is broadcast by the second device.

In some embodiments, the first sending unit 1420 is further configured to send the second information to the second device when the first device is synchronized.

In some embodiments, the processing unit 1430 is further configured to: when the first device is out of synchronization, not send the second information to the second device and maintain that a value of a counter of the first device is equal to a first threshold. The first receiving unit 1410 is further configured to receive fifth information sent by the second device, the fifth information being used to trigger the first device to initiate a random access request. The first sending unit 1420 is further configured to send sixth information to the second device on a second time domain transmission occasion among N time domain transmission occasions when the first device is synchronized, the sixth information being used to initiate a random access request, where N is an integer greater than 1.

In some embodiments, the first receiving unit 1410 does not send the second information to the second device when the first device is out of synchronization; receives seventh information sent by the second device, the seventh information being used to indicate a third threshold, and the third threshold being used to determine a value of a counter of the first device; receiving eighth information sent by the second device, the eighth information being used for updating the value of the counter of the first device. The first sending unit 1420 is configured to: when the updated value of the counter of the first device is equal to the first threshold and the first device is synchronized, send ninth information to the second device on a third time domain transmission occasion among P time domain transmission occasions, the ninth information being used to initiate a random access request, where P is an integer greater than 1.

According to the communication apparatus provided by the embodiment of the present application, it may send second information on a first time domain transmission occasion among M time domain transmission occasions based on first information sent by a second device, so that other devices may also send second information to the second device on time domain transmission occasions, other than the first time domain transmission occasion, among the M time domain transmission occasions. In this way, random access efficiency of multiple devices is improved, and overhead of the second device sending downlink information is reduced.

Those skilled in the art should understand that the relevant description of the above communication apparatus in the embodiments of the present application may be understood with reference to the relevant description of the communication method in the embodiments of the present application.

FIG. 15 is a schematic diagram of structural composition of a communication apparatus 1500 provided by an embodiment of the present application, which is applied to a second device. As illustrated in FIG. 15, the communication apparatus 1500 includes a second sending unit 1510 and a second receiving unit 1520.

The second sending unit 1510 is configured to send first information to multiple devices, the first information being used for the multiple devices to update values of their respective counters;

The second receiving unit 1520 is configured to receive, on two or more time domain transmission occasions among M time domain transmission occasions located after the first information, second information respectively sent by two or more devices among the multiple devices, the second information being used to initiate a random access request. Herein, the updated values of respective counters of the two or more devices are equal to a first threshold, and M is an integer greater than 1.

In some embodiments, the two or more devices include a first device, and the second information is sent by the first device, and the second information includes a first random sequence. The first random sequence is generated by the first device, or selected by the first device from a set of sequences configured by a second device.

In some embodiments, the second sending unit 1510 is further configured to send third information to the first device, the third information including a second random sequence and a first index. Herein, when the second random sequence is the same as the first random sequence and the first index is an index of a first time domain transmission occasion, random access of the first device is successful. The first time domain transmission occasion is located within the two or more time domain transmission occasions, and the first time domain transmission occasion is used to receive the second information sent by the first device.

In some embodiments, the two or more devices further include a third device, and the third information further includes a third random sequence and a second index. The third random sequence and the second index are used for the third device to determine that random access was successful, and the third random sequence and the second index are concatenated with the second random sequence and the first index.

In some embodiments, the second sending unit 1510 is further configured to send the third information to the first device after receiving the second information sent by the first device; or send the third information to the first device after the M time domain transmission occasions end.

In some embodiments, the format of the second information includes a first guard interval and/or a first cyclic prefix, and a first payload. The first payload is used to carry the first random sequence.

In some embodiments, the second information is sent by each of the two or more devices, and the second information includes one or more formats. Herein, different formats of the second information correspond to different total lengths of the second information; and/or, different formats of the second information correspond to different lengths of guard interval; and/or, different formats of the second information correspond to different lengths of cyclic prefix.

In some embodiments, the format of the second information is determined based on respective capabilities of the two or more devices; and/or the format of the second information is configured based on broadcast from the second device.

In some embodiments, the second sending unit 1510 is further configured to send fourth information to the multiple devices, where the fourth information is used to indicate a second threshold, and the second threshold is used for the multiple devices to determine the values of their respective counters.

In some embodiments, the M time domain transmission occasions do not overlap each other in time.

In some embodiments, the value of M is specified by a protocol, or is broadcast by the second device.

In some embodiments, the two or more devices are synchronized with the second device.

According to the communication apparatus provided by the embodiments of the present application, the apparatus may send first information to multiple devices, and receive, on two or more time domain transmission occasions, second information sent by two or more devices among the multiple devices. In this way, random access efficiency of the multiple devices is improved, and overhead of the second device sending downlink information is reduced.

Those skilled in the art should understand that the relevant description of the above communication apparatus in the embodiments of the present application may be understood with reference to the relevant description of the communication method in the embodiments of the present application.

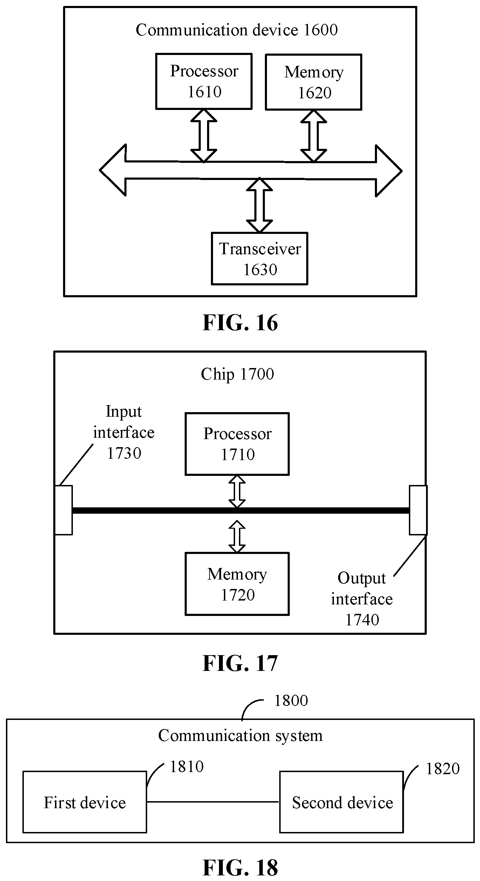

FIG. 16 is a schematic diagram of structural composition of a communication device provided by an embodiment of the present application. The communication device may be a first device or a second device. The communication device 1600 illustrated in FIG. 16 may include a processor 1610, a memory 1620, and a transceiver 1630.

The memory 1620 is used for storing a computer program.

The processor 1410 is connected with the memory 1620, and configured to invoke and execute the computer program from the memory 1620 to implement the methods in the embodiments of the present.

The transceiver 1630 is also referred to as a communication interface, and is configured to receive and transmit information during information exchange with other external devices.

In some embodiments, the memory 1620 may be a separate device independent of the processor 1610, or may be integrated in the processor 1610.

In some embodiments, the transceiver 1630 may include an input interface. The processor 1610 may control the input interface to communicate with other external devices, specifically, to receive information or data sent by other external devices.

In some embodiments, the transceiver 1630 may include an output interface. The processor 1610 may control the output interface to communicate with other external devices, specifically, to transmit information or data to other external devices.

In some embodiments, the transceiver 1630 may include a transmitter and a receiver. The transceiver 1630 may further include antennas, and the number of antennas may be one or more.

In some embodiments, the communication device 1600 may be the first device in the embodiments of the present application, and the communication device 1600 may implement corresponding processes in various methods implemented by the first device in the embodiments of the present application, which will not be elaborated herein for the sake of brevity.

In one implementation, the communication device 1600 may be the second device in the embodiments of the present application, and the communication device 1600 may implement corresponding processes in various methods implemented by the second device in the embodiments of the present application, which will not be elaborated herein for the sake of brevity.

FIG. 17 is a schematic structural diagram of a chip provided by an embodiment of the present application. The chip 1700 in FIG. 17 includes a processor 1710, and the processor 1710 may invoke and execute a computer program from a memory to implement the methods in the embodiments of the present application.

In some embodiments, as illustrated in FIG. 17, the terminal device 1700 may further includes a memory 1720. The processor 1710 may invoke and execute a computer program from the memory 1720 to implement the methods in the embodiments of the present application.

The memory 1720 may be a separate device independent of the processor 1710 or may be integrated in the processor 1710.

In some embodiments, the communication device 1700 may include an input interface 1730. The processor 1710 may control the input interface 1730 to communicate with other devices or chips, and specifically, may acquire information or data transmitted by other devices or chips.

In some embodiments, the chip 1700 may further include an output interface 1740. The processor 1710 may control the output interface 1740 to communicate with other devices or chips, specifically, may output information or data to other devices or chips.

In some embodiments, the chip may be applied to the first device in the embodiments of the present application, and the chip may implement corresponding processes in various methods implemented by the first device in the embodiments of the present application, which will not be elaborated herein for the sake of brevity.

In one implementation, the chip may be applied to the second device in the embodiments of the present application, and the chip may implement corresponding processes in various methods implemented by the second device in the embodiments of the present application, which will not be elaborated herein for the sake of brevity.

It is to be understood that the chip mentioned in the embodiments of the present application may also be referred to as a system-level chip, a system chip, a chip system or a system-on-chip or the like.

FIG. 18 is a schematic structural diagram of a communication device provided by an embodiment of the present application. As illustrated in FIG. 18, the wireless communication system 1800 includes a first device 1810 and a second device 1820.

The first device 1810 may be used to implement corresponding functions implemented by the first device in the above methods, and the second device 1820 may be used to implement corresponding functions implemented by the second device in the above methods, which will not be elaborated herein for the sake of brevity.

It is to be understood that the processor of the present application may be an integrated circuit chip having a signal processing capability. In implementation, the actions of the above method embodiments may be accomplished by integrated logic circuitry of hardware in the processor or instructions in the form of software. The above processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, actions and logic diagrams disclosed in the embodiments of the present application. The general purpose processor may be a microprocessor or any conventional processor. The actions of the method disclosed in the embodiments of the present application may be directly embodied as being executed by a hardware decoding processor or being executed by hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the actions of the aforementioned method in conjunction with its hardware.

It will be appreciated that the memory in the embodiments of the present application may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It is to be noted that the memory in the systems and methods described herein is intended to include, but is not limited to, these memories and any other suitable types of memory.

It is to be understood that the memory described above is exemplary but not limiting. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present application is intended to include, but is not limited to, these memories and any other suitable types of memory.

An embodiment of the present application further provides a computer readable storage medium for storing a computer program that, when executed by at least one processor, causes to perform the methods as described in the embodiments of the present application.

In some embodiments, the computer-readable storage medium may be applied to the first device in the embodiments of the present application, and the computer program causes a computer to execute corresponding processes in various methods implemented by the first device in the embodiments of the present application, which will not be elaborated herein for the sake of brevity.

In some embodiments, the computer-readable storage medium may be applied to the second device in the embodiments of the present application, and the computer program causes a computer to execute corresponding processes in various methods implemented by the second device in the embodiments of the present application, which will not be elaborated herein for the sake of brevity.

An embodiments of the present application also provides a computer program product, including a computer storage medium having stored therein a computer program including instructions executable by at least one processor, where the instructions, when executed by the at least one processor, cause to implement the methods in the embodiments of the present application.

In some embodiments, the computer program product may be applied to the first device in the embodiments of the present application, and the computer program causes a computer to execute corresponding processes in various methods implemented by the first device in the embodiments of the present application, which will not be elaborated herein for the sake of brevity.

In some embodiments, the computer program product may be applied to the second device in the embodiments of the present application, and the computer program causes a computer to execute corresponding processes in various methods implemented by the second device in the embodiments of the present application, which will not be elaborated herein for the sake of brevity.

An embodiment of the present application also provides a computer program product, which causes a computer to perform the methods in the embodiments of the present application.

In some embodiments, the computer program may be applied to the first device in the embodiments of the present application, and the computer program, when executed by a computer, causes the computer to execute corresponding processes in various methods implemented by the first device in the embodiments of the present application, which will not be elaborated herein for the sake of brevity.

In some embodiments, the computer program may be applied to the second device in the embodiments of the present application, and the computer program, when running on a computer, causes the computer to execute corresponding processes in various methods implemented by the second device in the embodiments of the present application, which will not be elaborated herein for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present application.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided in the present application, it should be understood that the disclosed systems, apparatuses and methods may be implemented in other manners. For example, the above-described embodiments of the apparatus are only schematic, for example, the division of the units is only a logical function division, and in practice, there may be another division manner, for example, multiple units or components may be combined or integrated into another system, or some features may be ignored or not performed. In addition, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present application.

In addition, various functional unit in various embodiments of the present application may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the present application, in essence or the part contributing to the prior art, or part of the technical solutions may be embodied in the form of a software product. The computer software product is stored in a storage medium, and includes several instructions so that a computer device (which may be a personal computer, a server, a network device or the like) implements all or part of the method according to respective embodiments of the present application. The aforementioned storage medium includes various media capable of storing a program code such as a USB disk, a mobile hard drive disk, a read-only memory (ROM), a random access memory (RAM), a magnetic disk or an optical disk.

The above is only the specific implementation of the present application, but the scope of protection of the present application is not limited thereto. Any person skilled in the art may easily think of changes or substitutions within the technical scope disclosed in the present application, which is to be covered within the protection scope of the present application. Therefore, the scope of protection of the present application shall comply with the scope of protection of the claims.

## Claims

1. A communication method, applied to a first device, the method comprising:
receiving first information sent by a second device, the first information being used for a plurality of devices to update values of their respective counters; and
when the updated value of a counter of the first device is equal to a first threshold, sending second information to the second device on a first time domain transmission occasion among M time domain transmission occasions located after the first information, the second information being used to initiate a random access request, wherein the plurality of devices include the first device, and M is an integer greater than 1.

2. The method of claim 1, wherein
the second information comprises a first random sequence, wherein the first random sequence is generated by the first device, or selected by the first device from a set of sequences configured by the second device.

3. The method of claim 2, further comprising:
receiving third information sent by the second device, the third information comprising a second random sequence and a first index; and
determining that random access is successful, when the second random sequence is the same as the first random sequence and the first index is an index of the first time domain transmission occasion.

4. The method of claim 3, wherein the plurality of device further comprise a third device,
the third information further comprises a third random sequence and a second index, the third random sequence and the second index are used for the third device to determine that random access is successful, and are concatenated with the second random sequence and the first index.

5. The method of claim 3 or 4, wherein
the third information is monitored starting after the second information is sent, or monitored after the M time domain transmission occasions end.

6. The method of any one of claims 2 to 5, wherein a format of the second information comprises a first guard interval and/or a first cyclic prefix, and a first payload, wherein the first payload is used to carry the first random sequence.

7. The method of any one of claims 1 to 6, wherein
a format of the second information is determined based on a capability of the first device; and/or
a format of the second information is configured based on broadcast from the second device.

8. The method of any one of claims 1 to 7, further comprising: before sending the first information,
receiving fourth information sent by the second device, the fourth information being used to indicate a second threshold, and the second threshold being used for the plurality of devices to determine the values of their respective counters.

9. The method of any one of claims 1 to 8, wherein the M time domain transmission occasions do not overlap in time.

10. The method of any one of claims 1 to 9, wherein a value of the M is specified by a protocol, or broadcast by the second device.

11. The method of any one of claims 1 to 10, wherein sending the second information to the second device comprises:
sending the second information to the second device when the first device is synchronized.

12. The method of claim 11, further comprising:
when the first device is out of synchronization, not sending the second information to the second device, and maintaining that the value of the counter of the first device is equal to the first threshold;
receiving fifth information sent by the second device, the fifth information being used to trigger the first device to initiate a random access request; and
when the first device is synchronized, sending sixth information to the second device on a second time domain transmission occasion among N time domain transmission occasions, the sixth information being used to initiate a random access request, wherein N is an integer greater than 1.

13. The method of claim 11, further comprising:
not sending the second information to the second device when the first device is out of synchronization,;
receiving seventh information sent by the second device, the seventh information being used to indicate a third threshold, and the third threshold value being used to determine the value of a counter of the first device;
receiving eighth information sent by the second device, the eighth information being used to update the value of the counter of the first device; and
when the updated value of the counter of the first device is equal to the first threshold and the first device is synchronized, sending ninth information to the second device on a third time domain transmission occasion among P time domain transmission occasions, the ninth information being used to initiate a random access request, wherein P is an integer greater than 1.

14. A communication method, applied to a second device, the method comprising:
sending first information to a plurality of devices, the first information being used for the plurality of devices to update values of their respective counters; and
receiving, on two or more time domain transmission occasions among M time domain transmission occasions located after the first information, second information respectively sent by two or more devices among the plurality of devices, the second information being used to initiate a random access request, wherein updated values of respective counters of the two or more devices are equal to a first threshold, and M is an integer greater than 1.

15. The method of claim 14, wherein the two or more devices further comprise a first device,
the second information is sent by the first device, and the second information comprises a first random sequence generated by the first device, or selected by the first device from a set of sequences configured by the second device.

16. The method of claim 15, further comprising:
sending third information to the first device, the third information comprising a second random sequence and a first index,
wherein random access of the first device is successful when the second random sequence is the same as the first random sequence and the first index is an index of a first time domain transmission occasion, the first time domain transmission occasion is located on the two or more time domain transmission occasions, and the first time domain transmission occasion is used to receive the second information sent by the first device.

17. The method of claim 16, wherein the two or more devices further comprise a third device,
the third information further comprises a third random sequence and a second index, the third random sequence and the second index are used for the third device to determine that random access is successful, and are concatenated with the second random sequence and the first index.

18. The method of claim 16 or 17, wherein sending the third information to the first device comprises:
sending the third information to the first device after receiving the second information sent by the first device; or
sending the third information to the first device after the M time domain transmission occasions end.

19. The method of any one of claims 15 to 18, wherein a format of the second information comprises a first guard interval and/or a first cyclic prefix, and a first payload, wherein the first payload is used to carry the first random sequence.

20. The method of any one of claims 14 to 19, wherein the second information is sent by the two or more devices respectively, and the second information comprises one or more formats, wherein
different formats of the second information correspond to different total lengths of the second information; and/or,
different formats of the second information correspond to different lengths of guard interval; and/or,
different formats of the second information correspond to different lengths of cyclic prefix.

21. The method of claim 20, wherein
the format of the second information is determined based on respective capabilities of the two or more devices; and/or,
the format of the second information is configured based on broadcast from the second device.

22. The method of any one of claims 14 to 21, further comprising: before sending the first information,
sending fourth information to the plurality of devices, the fourth information being used to indicate a second threshold, and the second threshold being used for the plurality of devices to determine the values of their respective counters.

23. The method of any one of claims 14 to 22, wherein the M time domain transmission occasions do not overlap in time.

24. The method of any one of claims 14 to 23, wherein values of the M is specified by a protocol, or broadcast by the second device.

25. The method of claim 14, wherein the two or more devices are synchronized with the second first device.

26. A communication apparatus, comprising:
a first receiving unit, configured to receive first information sent by a second device, the first information being used for a plurality of devices to update values of their respective counters; and
a first sending unit, configured to: when the updated value of a counter of the apparatus is equal to a first threshold, send second information to the second device on a first time domain transmission occasion among M time domain transmission occasions located after the first information, the second information being used to initiate a random access request, wherein the plurality of devices include the apparatus, and M is an integer greater than 1.

27. A communication apparatus, comprising:
a second sending unit, configured to send first information to a plurality of devices, the first information being used for the plurality of devices to update values of their respective counters; and
a second receiving unit, configured to receive, on two or more time domain transmission occasions among M time domain transmission occasions located after the first information, second information respectively sent by two or more devices among the plurality of devices, the second information being used to initiate a random access request, wherein updated values of the respective counters of the two or more devices are equal to a first threshold, and M is an integer greater than 1.

28. A communication device, comprising:
a memory for storing a computer program;
a processor, configured to invoke and execute a computer program from the memory to implement the method of any one of claims 1 to 13, or to implement the method of any one of claims 14 to 25; and
a transceiver, configured to receive and transmit information during information exchange with other external devices.

29. A chip, comprising:
a memory for storing a computer program;
a processor, connected to the memory and configured to invoke and execute a computer program from the memory to cause a device on which the chip is installed to perform the method of any one of claims 1 to 13, or to perform the method of any one of claims 14 to 25; and
a transceiver, configured to receive and transmit information during information exchange with a device or a chip.

30. A computer readable storage medium, having stored therein a computer program that, when executed by at least one processor, causes to implement the method of any one of claims 1 to 13, or to implement the method of any one of claims 14 to 25.

31. A computer program product, comprising a computer program or computer instructions that, when executed by a processor, cause to implement operations in the method of any one of claims 1 to 13 or to implemented operations in the method of any one of claims 14 to 25.

32. A computer program, which causes a computer to perform the method of any one of claims 1 to 13 or to perform the method of any one of claims 14 to 25.
